# EUROPÄISCHE PATENTSCHRIFT

(11) **EP 2 386 761 B1**
(45) Veröffentlichungstag und Bekanntmachung des Hinweises auf die Patenterteilung: **28.08.2019**
(21) Anmeldenummer: 11164103.1
(22) Anmeldetag: 28.04.2011
(51) Int. Cl.: F04D 25/04, F04D 29/42, F04D 29/66, F04D 29/70, F02M 25/06, F02M 21/04, F02M 35/10, F02M 35/12, F02M 35/14, F02B 37/16

(54) **Verdichtergehäusezusatz**
Compressor housing add-on
Supplément de carter de compresseur

(30) Priorität: 14.05.2010 DE 102010028975
(43) Veröffentlichungstag der Anmeldung: 16.11.2011
(73) Patentinhaber: ABB Turbo Systems AG, 5400 Baden (CH)
(72) Erfinder: Rusch, Daniel, 5430, Wettingen (CH); Mundinger, Gerd, 5430, Wettingen (CH); Weber, Jürg, 5452, Oberrohrdorf (CH); Vacca, Andrea, 4805, Brittnau (CH); Schleer, Matthias, 8046, Zürich (CH); Reichl, Armin, 79790, Küssaberg (DE)
(74) Vertreter: Zimmermann & Partner Patentanwälte mbB

(56) Entgegenhaltungen:
- EP-A1- 2 110 531
- WO-A1-2008/070649
- WO-A1-2009/077748
- DE-A1- 2 531 330
- DE-A1- 4 213 047
- DE-B1- 2 350 784
- DE-U1-202007 005 986
- US-A- 4 204 586
- US-A1- 2006 045 764
- US-A1- 2007 271 920

## Beschreibung

### Technisches Gebiet

Die Erfindung bezieht sich auf das Gebiet der Abgasturbolader für aufgeladene Brennkraftmaschinen.

Sie betrifft einen Verdichtergehäusezusatz zur Anordnung zwischen dem Schalldämpfer und dem Verdichtergehäuse eines Abgasturboladers, mit welchem ein gasförmiges Medium in den Anströmkanal des Verdichters eines Abgasturboladers eingeblasen werden kann. Die Erfindung betrifft weiter eine Schalldämpfervorrichtung mit einem solchen Verdichtergehäusezusatz, sowie einen Abgasturbolader mit einer Schalldämpfervorrichtung mit einem solchen Verdichtergehäusezusatz.

### Stand der Technik

Für die Leistungssteigerung einer Brennkraftmaschine (Verbrennungsmotor) werden heutzutage standardmässig Abgasturbolader mit einem der Brennkammer der Brennkraftmaschine Luft für den Verbrennungsvorgang zuführenden Verdichter und einer Abgasturbine im Abgastrakt der Brennkraftmaschine eingesetzt. Mit der Aufladung der Brennkraftmaschine wird die Luft- und Kraftstoffmenge in den Brennkammern (Zylindern) erhöht und daraus ein merklicher Leistungsanstieg für die Brennkraftmaschine gewonnen. Der dafür verwendete Abgasturbolader setzt sich standardmässig aus einem Rotor, bestehend aus einem Verdichterrad und einem Turbinenrad sowie der Wellenlagerung, den strömungsführenden Gehäuseteilen (Verdichtergehäuse, Turbinengehäuse) und dem Lagergehäuse zusammen.

Je nach Motortyp oder Anwendung kann es vorkommen, dass der zu verdichtenden Luft zusätzlich ein gasförmiges Medium, beispielsweise bereits verdichtete Luft, sogenannte Verdichter-Bypass-Luft oder Luft-Brennstoff-Gemische oder gasförmige Brennstoffe oder beispielsweise Gase aus der Entlüftung des Kurbelgehäuses von Gasmotoren, zugeführt werden.

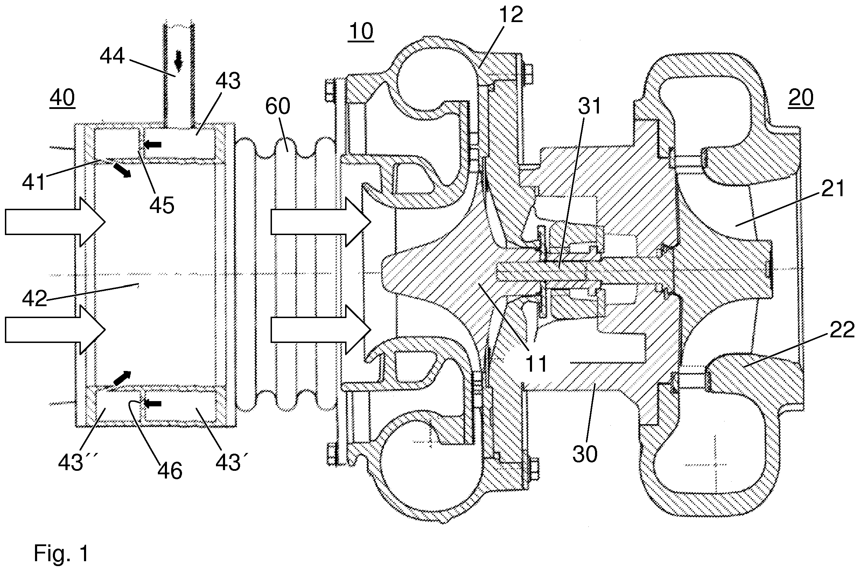

Damit der Verdichterbetrieb nicht durch lokal variierende Strömungsgeschwindigkeiten oder Turbulenzen, welche ungewollte Anregungen der Laufschaufeln des Verdichterrades verursachen können oder durch thermische Schichtungen in der Strömung gestört wird, hat eine solche Zuführung eines gasförmigen Mediums über eine ringförmige Einblasöffnung und möglichst in einem grossen Abstand zum Verdichterradeintritt zu erfolgen. Damit die einzudüsende Luft- oder Gasmenge gleichförmig über den Umfang des Anströmkanals auf den Verdichter verteilt wird, ist vorteilhafterweise hinter der ringförmigen Einblasöffnung eine Ringkammer mit einem ringförmigen Hohlraum zum Sammeln und Verteilen der Luft oder des Gases angeordnet. Fig. 1 zeigt schematisch den Verdichter eines Abgasturboladers mit einer in einem zusätzlichen Gehäuse angeordneten Einblasvorrichtung zur Zuleitung eines gasförmigen Mediums in den Strömungskanal der zu verdichtenden Luft. Zur Wahrung eines erforderlichen Abstands der Einblasöffnung von dem Verdichterradeintritt, ist zwischen dem Gehäusezusatz und dem Verdichtergehäuse ein Kompensatorelement und/ oder Abstandshalter angeordnet, über welchen der Gehäusezusatz am Verdichtergehäuse befestigt ist. Die Zuleitung der zu verdichtenden Luft erfolgt über einen Ansaugstutzen, oder, nicht dargestellt, über einen direkt mit dem Gehäusezusatz verbundenen Schalldämpfer. Eine derartige Zuführung eines gasförmigen Mediums ist aus den ABB Turboladern vom Typ TPS 44-61 bekannt.

Ein Schalldämpfer für einen Abgasturbolader ist etwa aus der DE 19514990 bekannt. Dämpfungselemente werden mit Abstand zueinander im Schalldämpfer angeordnet, so dass die zu verdichtende Luft zwischen den Dämpfungselementen hindurch angesaugt werden kann. Die Dämpfungselemente bestehen beispielsweise aus einem Dämpfungsblech, welches einem Absorptionselement Form und/ oder Halt gibt. Am Umfang des Schalldämpfers ist ein ringförmiges Lochblech angeordnet, welcher als Grobfilter dient. Derartige Schalldämpfer können direkt am Verdichtergehäuse des Abgasturboladers befestigt sein, so dass die Luft nach dem Austritt aus dem Schalldämpfer direkt in den Ansaugbereich des Verdichters geführt ist. Dabei ist für das Schwingungsverhalten der Einheit Abgasturbolader und Schalldämpfer von Bedeutung, dass der Schalldämpfer möglichst kompakt am Verdichtergehäuse anliegt und dieses in axialer Richtung so wenig wie möglich überragt.

Soll bei einem direkt am Abgasturbolader aufgesetzten Schalldämpfer zusätzlich vor dem Verdichter ein gasförmiges Medium eingeblasen werden, stehen sich die Anforderungen aus Schwingungsverhalten der Einheit Abgasturbolader und Schalldämpfer und Strömungseigenschaft des Verdichters gegensätzlich entgegen.

DE2350784B1 offenbar eine Aufladevorrichtung einer Brennkraftmaschine mit zuschaltbarem Vorgebläse. DE2531330A1 offenbart einen Schalldämpfer für einen Abgasturbolader mit einem Verstellmechanismus um unterschiedliche Kanäle mit der Luftzuführung in Kommunkation bringen zu können. EP2110531A1 und US4204586 offenbaren jeweils einen Abgasturbolader mit Schalldämpfer mit radialer Luftansaugung. WO2008070649A1 und US20070271920A1 offenbaren jeweils eine den Strömungskanal umschliessende Vorrichtung zum Zuführen von gasförmigen Medien in den Strömungskanal vor dem Verdichtereintritt. DE4213047A1 offenbart einen Verdichter mit einem ins Verdichtergehäuse eingeschobenen Gehäuseeinsatz mit einer Rezirkulationskammer, welcher zusätzlich von aussen ein gasförmiges Medium zugeführt werden kann.

### Kurze Darstellung der Erfindung

Die Aufgabe der Erfindung besteht folglich darin, einen Verdichtergehäusezusatz zu schaffen, der zwischen dem Schalldämpfer und dem Verdichtergehäuse eines Abgasturboladers angeordnet werden kann, und welcher trotz kompakter Bauweise die Zuführung eines zusätzlichen, gasförmigen Mediums in den Strömungskanal vor dem Verdichter ermöglicht, ohne dass dabei die Strömungseigenschaften des Verdichters beeinträchtigt werden.

Erfindungsgemäss wird dies durch eine Schalldämpfervorrichtung mit den Merkmalen des Anspruchs 1 erreicht, nämlich dadurch, dass der zwischen dem im Ansaugbereich des Verdichters angeordneten Schalldämpfer und dem Verdichtergehäuse vorgesehene Gehäusezusatz derart ausgebildet ist, dass er die Einblasung in den Strömungskanal vor der Umlenkung der Strömung im Ansaugbereich aus der radialen in die axiale Richtung ermöglicht. Die Einblasung erfolgt dabei im Bereich der verdichterseitigen Stirnseite des zylindrischen Schalldämpfers, wobei in die stirnseitige Gehäusewand des Schalldämpfers Einblasöffnungen eingelassen sind, welche einen ringförmigen Hohlraum im Innern des Gehäusezusatzes mit dem Strömungskanal im Innern des Schalldämpfers verbinden.

Durch die Einblasung des gasförmigen Mediums in die zu verdichtende Luft vor der Umlenkung der Strömung beim Austreten aus der zentralen Öffnung des Schalldämpfers erfolgt bei ebendieser Umlenkung eine Vermischung des gasförmigen Mediums mit der Luft sowie eine Eliminierung der durch die Einblasung entstehenden Verwirbelungen in der Ansaugströmung.

Der Gehäusezusatz umfasst zusätzlich zum koaxial zur Welle des Abgasturboladers angeordneten, ringförmigen Hohlraum mindestens eine Zuleitung zum Zuführen eines gasförmigen Mediums in den Hohlraum. Der Hohlraum weist auf der dem Schalldämpfer zugewandten Seite eine Ableitungsöffnung auf, durch welche das gasförmige Medium auf die Einblasöffnungen in der Gehäusewand des Schalldämpfers und in den Strömungskanal im Schalldämpfer geführt werden kann.

Optional ist im Hohlraum eine Blende angeordnet, welche den Hohlraum in zwei Teilhohlräume unterteilt, welche über eine Durchströmöffnung miteinander verbunden sind. Diese Unterteilung sorgt für eine verbesserte Verteilung des gasförmigen Mediums entlang des Umfangs des Hohlraums, so dass das gasförmige Medium gleichmässig verteilt über die Einblasöffnungen der Strömung im Schalldämpfer zugeführt werden kann. Die Blende ist optional scheibenförmig und derart bemessen, dass sie sich in axialer Richtung durch die Ableitungsöffnung in den Hohlraum einsetzen lässt.

Weitere Vorteile ergeben sich aus den abhängigen Ansprüchen.

### Kurze Beschreibung der Zeichnungen

Folgend ist anhand der Zeichnungen eine Ausführungsform der erfindungsgemässen Einblasvorrichtung zum Einblasen eines gasförmigen Mediums in den Anströmkanal des Verdichters eines Abgasturboladers beschrieben. Hierbei zeigt
- Fig. 1: einen Abgasturbolader gemäss dem Stand der Technik, mit einer Vorrichtung zum Einblasen eines gasförmigen Mediums in den Strömungskanal stromaufwärts des Ansaugbereichs des Verdichters, wobei diese Vorrichtung mittels eines Kompensationselements vom Verdichtergehäuse beabstandet angeordnet ist,
- Fig. 2: ein Schalldämpfergehäuse und ein Verdichtergehäuse mit einem dazwischen angeordneten, erfindungsgemässen Verdichtergehäusezusatz,
- Fig. 3: den Verdichtergehäusezusatz nach Fig. 2 im unmontierten Zustand, und
- Fig. 4: eine isometrische Darstellung der Vorrichtung nach Fig. 2, wobei der Schalldämpfer und der Verdichtergehäusezusatz teilweise aufgeschnitten sind, um einen Einblick ins Innere zu ermöglichen.

### Weg zur Ausführung der Erfindung

Fig. 1 zeigt einen Abgasturbolader gemäss dem Stand der Technik mit einem Radialverdichter und einer Radialturbine. Das Turbinenrad 21 ist auf der Welle 31 befestigt oder einteilig mit dieser ausgeführt. Das Turbinengehäuse 22 umschliesst das Turbinenrad und begrenzt die Strömungskanäle, welche das heisse Abgas von der Brennkraftmaschine über das Turbinenrad zu den Auspuffanlagen führen. Das Verdichterrad 11 ist ebenfalls auf der Welle 31 befestigt. Das Verdichtergehäuse 12 umschliesst das Verdichterrad und begrenzt die Strömungskanäle, welche die Luft für die Brennkraftmaschine über das Verdichterrad zu den Brennkammern führen. Die zu verdichtende Luft wird über einen Schalldämpfer und/ oder einen Luftansaugstutzen dem Verdichter zugeführt, wobei der Schalldämpfer in der Regel direkt auf dem Verdichtergehäuse aufgesetzt und mit diesem fest verschraubt ist. In der dargestellten Ausführungsform ist stromaufwärts des Ansaugbereichs des Verdichters ein Gehäusezusatz 40 angeordnet, mittels welchem der Hauptströmung der zu verdichtenden Luft - in den Figuren mittels weisser Pfeile dargestellt - ein zusätzliches gasförmiges Medium - in den Figuren durch ausgefüllte, schwarze Pfeile dargestellt - zugeführt werden kann. Der Gehäusezusatz 40 umfasst hierfür einen ringförmigen Hohlraum 43 welcher den Strömungskanal in der zentralen Öffnung umgibt. Aus dem Hohlraum 43 führen düsenförmig ausgebildete Ableitungsöffnungen 41 in den Strömungskanal. Das gasförmige Medium wird über eine externe Zuleitung 44 in den Hohlraum geführt. Im Innern des Hohlraums 43 ist eine Blende 45 angeordnet, welche den Hohlraum in zwei ringförmige Teile 43' und 43" unterteilt, wobei in die Blende mindestens eine Durchströmöffnung 46 eingelassen ist, welche den Durchfluss des gasförmigen Mediums von einem Teilhohlraum in den anderen ermöglicht.

Der Gehäusezusatz 40 ist über ein Kompensatorelement (Abstandshalter) mit dem Verdichtergehäuse 12 verbunden. Der Abstandshalter ist, wie Eingangs beschrieben, notwendig, um die vollständige Vermischung des eingedüsten gasförmigen Mediums mit der zu angesaugten Luft der Hauptströmung bis zum Auftreffen auf die Laufschaufeln des Verdichterrades sicherzustellen. Damit sollen in der Strömung lokal variierende Strömungsgeschwindigkeiten oder Turbulenzen, welche ungewollte Anregungen der Laufschaufeln des Verdichterrades verursachen können, sowie thermische Schichtungen weitgehend vermieden werden.

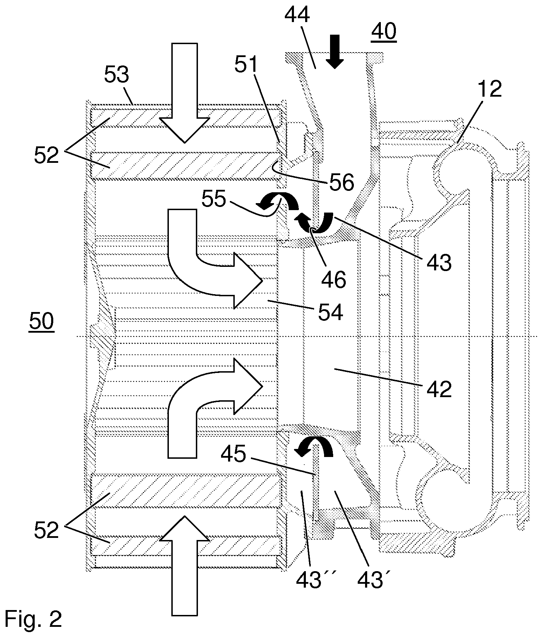

Fig. 2 zeigt einen Schalldämpfer 50 sowie ein Verdichtergehäuse 12 mit dazwischen angeordnetem Verdichtergehäusezusatz 40. Der Schalldämpfer hat eine zylindrische Form und umfasst stirnseitig jeweils eine kreisrunde Gehäusewand, wobei in die verdichterseitige Gehäusewand 51 eine zentrale Luftaustrittsöffnung 54 eingelassen ist, durch welche die zu verdichtende Luft in den zum Verdichterrad führenden Strömungskanal geleitet wird. Je nach Bauart des Schalldämpfers ist der Lufteintritt im Bereich der Zylindermantelfläche oder im radial äusseren Bereich einer der Stirnflächen angeordnet. In der dargestellten Ausführungsform ist der Ansaugbereich in der Zylindermantelfläche von einem Filter 53 umgeben, welcher in Form eines luftdurchlässigen Maschengewebes oder eines Lochblechs das Ansaugen von grösseren Fremdkörpern und Schmutzpartikel verhindern soll. Die angesaugte Luft strömt in radial von aussen nach innen verlaufenden Kanälen entlang von Dämpfungselementen 52 hin zur zentralen Luftaustrittsöffnung 54, wobei im Schnittbild gemäss Fig. 2 die nicht streng radial verlaufenden Kanäle zwischen den Dämpfungselementen 52 ersichtlich sind. Die Dämpfungselemente bestehen in der Regel aus mindestens einem Absorptionselement sowie einem Blech, welches dem Absorptionselement Form und/ oder Halt gibt. Die Dämpfungselemente 52 sind in Nuten 56 geführt, welche in die stirnseitigen Gehäusewände 51 eingelassen sind. Bei der Montage des Schalldämpfers können die Dämpfungselemente von radial aussen in diese Nuten eingeschoben werden. Alternativ können die Dämpfungselemente auch durch stirnseitig in die Gehäusewände eingelassene Schlitze eingeführt werden, wobei in diesem Fall die Dämpfungselemente auf parallel zur Achse verlaufenden Halterungen geführt sind.

Der Verdichtergehäusezusatz 40 ist zwischen dem Schalldämpfer 50 und dem Verdichtergehäuse 12 angeordnet. Er weist ebenfalls eine zylindrische Form auf und umfasst eine zentrale Öffnung 42, welche als Strömungskanal die Luftaustrittsöffnung 54 am Schalldämpfer mit der Lufteintrittsöffnung am Verdichtergehäuse 12 verbindet. Im Verdichtergehäusezusatz ist ein ringförmiger Hohlraum 43 vorgesehen, welcher den Strömungskanal in der zentralen Öffnung 42 umgibt. Der Hohlraum 43 weist eine externe Zuleitung 44 auf, über welche ein gasförmiges Medium eingespeist werden kann. In der dargestellten Ausführungsform weist der Verdichtergehäusezusatz 40 auf der dem Schalldämpfer zugewandten Stirnseite eine umlaufende Ableitungsöffnung auf, welche durch die stirnseitige Gehäusewand 51 des Schalldämpfers abgedeckt ist. Somit begrenzt die Gehäusewand 51 des Schalldämpfers in dem Bereich der Ableitungsöffnung den Hohlraum 43. In die Gehäusewand 51 sind erfindungsgemäss Einblasöffnungen 55 eingelassen, welche den Hohlraum 43 im Verdichtergehäusezusatz mit dem Strömungskanal im Schalldämpfer verbinden und das Einblasen des gasförmigen Mediums in ebendiesen Strömungskanal im Schalldämpfer ermöglichen. Die Einblasöffnungen 55 sind typischerweise entlang des Umfangs verteilt angeordnet und weisen optional Düsenform auf.

Um innerhalb des Hohlraums 43 vor dem Austreten durch die Einblasöffnungen 55 entlang dem Umfang verteilt eine optimale Verteilung des gasförmigen Mediums zu erzielen, wird der Hohlraum mittels einer kreisringscheibenförmigen Blende 45 in zwei Teilhohlräume 43' und 43" unterteilt. Zwischen den Teilhohlräumen ist im Bereich der Blende 45 eine Durchströmöffnung 46 vorgesehen, entweder in Form mehrerer einzelner, entlang dem Umfang verteilter Bohrungen in der Blende oder aber in Form eines von Blende und Gehäuse des Verdichtergehäusezusatzes begrenzten, ring- oder ringsegmentförmigen Spalts. Optional kann die Blende als Lochblech oder Gittergeflecht ausgebildet sein

Das gasförmige Medium wird im Betrieb durch die eine externe Zuleitung 44, oder optional durch mehrere externe Zuleitungen, in den ersten Teil 43' des Hohlraums geführt und verteilt sich aufgrund des durch die Blende bewirkten Strömungswiderstands innerhalb des Hohlraums über den gesamten Umfang. Anschliessend strömt das gasförmige Medium durch die Durchströmöffnung 46 in den zweiten Teil 43" des Hohlraums, in welchem es sich ausbreitet. Schliesslich strömt das gasförmige Medium durch die Einblasöffnungen 55 in den Strömungskanal des Schalldämpfers, wo es von der Hauptströmung der zu verdichtenden Luft erfasst wird und sich mit dieser vermischt.

Dank der erfindungsgemässen Ausführung des Verdichtergehäusezusatzes und der Zuführung des gasförmigen Mediums vor der Umlenkung der Hauptströmung der zu verdichtenden Luft aus der radialen in die axiale Richtung, kommt es bei ebendieser Umlenkung der nunmehr mit dem gasförmigen Medium angereicherten Hauptströmung der zu verdichtenden Luft zu der angestrebten gleichmässigen Vermischung. Damit weist die Strömung die für den sicheren Betrieb des Verdichters notwendige strömungsdynamische und thermische Homogenität auf.

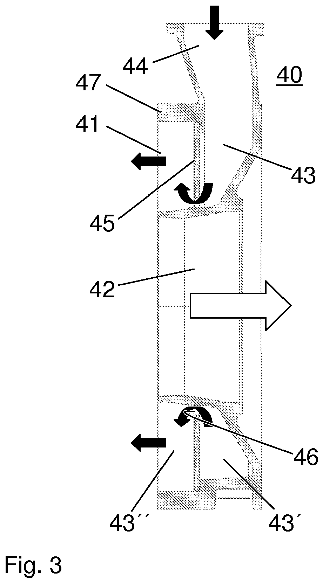

Fig. 3 zeigt den Verdichtergehäusezusatz im unmontierten Zustand, wobei gegenüber der Ausführung nach Fig. 2 im Bereich der Verbindung zum Schalldämpfer ein axial vorstehender äusserer Gehäuseflansch 47 angebracht wurde, zur besseren Veranschaulichung der Ableitungsöffnung 41, durch welche das gasförmige Medium aus dem zweiten Teil 43" des Hohlraums in den Strömungskanal des Schalldämpfers geführt wird.

Für den Fall, dass die Blende 45 nicht durch die Ableitungsöffnung 41 in den Hohlraum eingebracht werden muss, oder auf eine Blende ganz verzichtet wird, kann der Hohlraum zur Schalldämpferseite hin durch eine Gehäusewand des Verdichtergehäusezusatzes begrenzt sein, in welche Gehäusewand die Ableitungsöffnungen eingelassen sind, welche direkt die Funktion der Einblasöffnungen in den Strömungskanal des Schalldämpfers übernehmen können.

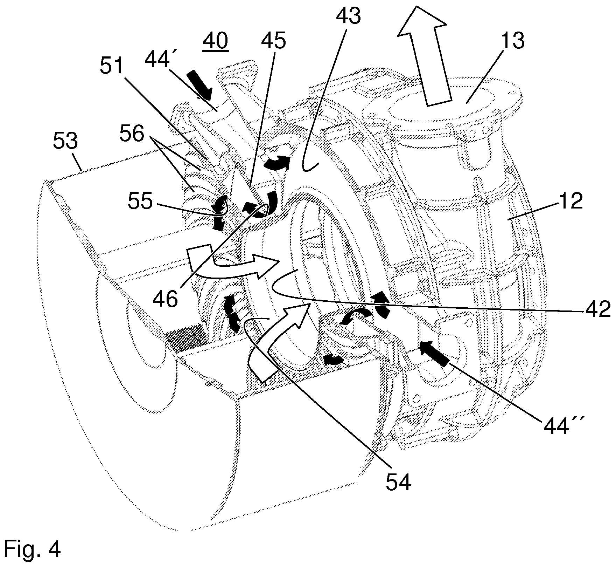

In der teilweise aufgeschnittenen, isometrischen Darstellung der bereits beschriebenen Vorrichtung macht Fig.4 zusätzlich sichtbar, wie die Einblasöffnungen 55 in der stirnseitigen Gehäusewand 51 des Schalldämpfers zwischen in ebendiese Gehäusewand 51 eingelassene Nuten 56 angeordnet sind. Die Nuten 56 dienen, wie oben beschrieben, der Aufnahme der Dämpfungselemente, welche in dieser Darstellung fehlen. Durch die Anordnung der Einblasöffnungen 55 in den engen Kanälen zwischen den Dämpfungselementen, erfolgt bei der Einblasung des gasförmigen Mediums in die zu verdichtende Luft eine starke Verwirbelung und eine entsprechend gute Vermischung, analog zu einem Strahl in einer Querströmung. Die Abnahme des Strömungsquerschnitts führt zu einer Beschleunigung der Strömung in der Umlenkung aus der radialen in die axiale Richtung, wodurch sich die Verwirbelungen weiter abschwächen und bis zum Verdichterradeintritt praktisch abgeklungen sind.

Die Ausführungsform des Verdichtergehäusezusatzes nach Fig. 4 weist zwei externe Zuleitungen 44' und 44" auf, durch welche optional zwei unterschiedliche gasförmige Medien in den Hohlraum geführt werden können. Optional könnte der erste Teil des Hohlraums zusätzlich in zwei separate, vollständig umlaufende, ringförmige Teile unterteilt sein, welche je separat über eine eigene externe Zuleitung verfügen und welche je separat über eigene Durchströmöffnungen zu dem gemeinsamen, zweiten Teil des Hohlraums verfügen, um eine gleichmässige Verteilung der unter Umständen mit unterschiedlichem Druck in die jeweiligen ringförmigen Teile des ersten Hohlraums eingebrachten Medien zu erzielen. Optional kann im Fall zweier oder mehrere externer Zuleitung auch die Einblasung in den Strömungskanal im Schalldämpfer über getrennte Einblasöffnungen erfolgen.

Alternativ kann der Hohlraum 43, oder zumindest der erste Teil 43' des Hohlraums, optional entlang des Umfangs in zwei oder mehrere Segmente unterteilt sein, wenn wiederum mehrere externe Zuleitungen 44' und 44" entlang des Umfangs des Verdichtergehäusezusatzes verteilt angeordnet sind.

### Bezugszeichenliste

- 10: Verdichter
- 11: Verdichterrad
- 12: Verdichtergehäuse
- 13: Luftaustritt
- 20: Abgasturbine
- 21: Turbinenrad
- 22: Turbinengehäuse
- 30: Lagergehäuse
- 31: Welle
- 40: (Verdichter-) Gehäusezusatz
- 41: Ableitungsöffnung
- 42: Zentrale Öffnung
- 43: ringförmiger Hohlraum (unterteilt in 43' und 43")
- 44: Externe Zuleitung für gasförmiges Medium
- 45: Blende
- 46: Durchströmöffnung
- 47: Gehäuseflansch
- 50: Schalldämpfer
- 51: Gehäusewand
- 52: Dämpfungselemente
- 53: Filter
- 54: Zentrale Luftaustrittsöffnung
- 55: Einblasöffnung
- 56: Nuten
- 60: Kompensator, Abstandhalter

## Patentansprüche

1. Schalldämpfervorrichtung,
welche zur Befestigung an einem Verdichtergehäuse eines Abgasturboladers vorgesehen ist, umfassend
einen zylindrischen Schalldämpfer (50), welcher
eine zentrale, axial gerichtete Luftaustrittsöffnung (54) zum Anschliessen an einen Anströmkanal eines Verdichters des Abgasturboladers sowie einen zur zentralen Luftaustrittsöffnung führenden und dabei mindestens eine Umlenkung von der radialen Richtung in die axiale Richtung vollziehenden Strömungskanal umfasst; sowie
einen Verdichtergehäusezusatz (40), welcher zur Anordnung zwischen dem Schalldämpfer und dem Verdichtergehäuse eines Abgasturboladers vorgesehen ist, umfassend
eine zentrale Öffnung (42) zur Durchführung des Anströmkanals des Verdichters eines Abgasturboladers,
einen die zentrale Öffnung umgebenden, ringförmigen Hohlraum (43),
eine in den Hohlraum mündende, externe Zuleitung (44) zum Zuleiten eines gasförmigen Mediums in den Hohlraum (43), sowie
eine Ableitungsöffnung (41) zum Ableiten des gasförmigen Mediums aus dem Hohlraum (43), **dadurch gekennzeichnet, dass**
die Ableitungsöffnung (41) axial gerichtet und auf der zur Befestigung am Schalldämpfer vorgesehenen Seite des Verdichtergehäusezusatzes angeordnet ist, und
das gasförmige Medium in den Strömungskanal des Schalldämpfers vor der Umlenkung der Strömung beim Austreten aus der zentralen Öffnung des Schalldämpfers einbläst, wobei
im Bereich einer stirnseitigen Gehäusewand (51) des Schalldämpfers mindestens eine Einblasöffnung (55) vorgesehen ist, welche den ringförmigen Hohlraum (43) mit dem Strömungskanal des Schalldämpfers verbindet und zur Einblasung des gasförmigen Mediums aus dem Hohlraum (43) in den Strömungskanal des Schalldämpfers vorgesehen ist.

2. Schalldämpfervorrichtung nach Anspruch 1, umfassend mehrere, entlang des Umfangs des ringförmigen Hohlraumes verteilte, in den ringförmigen Hohlraum (43) mündende, externe Zuleitungen (44) zum Zuleiten verschiedener gasförmiger Medien in den ringförmigen Hohlraum (43).

3. Schalldämpfervorrichtung nach einem der Ansprüche 1 oder 2, wobei im ringförmigen Hohlraum (43) zwischen der mindestens einen externen Zuleitung (44) und der mindestens einen Ableitungsöffnung (41) eine Blende (45) angeordnet ist, welche den ringförmigen Hohlraum in zwei ringförmige Teilhohlräume (43', 43") unterteilt, wobei die beiden ringförmigen Teilhohlräume (43', 43") mittels mindestens einer Durchströmöffnung (46) verbunden sind.

4. Schalldämpfervorrichtung nach Anspruch 3, wobei die Blende (45) ringscheibenförmig ausgebildet ist.

5. Schalldämpfervorrichtung nach Anspruch 4, wobei die ringscheibenförmige Blende (45) derart bemessen ist, dass sie bei der Montage in axialer Richtung durch die Ablassöffnung (41) in den Hohlraum (43) eingesetzt werden kann.

6. Schalldämpfervorrichtung nach einem der Ansprüche 3 bis 5, wobei mindestens eine Durchströmöffnung (46) durch die Blende (45) begrenzt ist, und die Durchströmöffnung ringförmig oder teilringförmig ausgebildet ist.

7. Schalldämpfervorrichtung nach einem der Ansprüche 3 bis 5, wobei mehrere Durchströmöffnungen (46) in die Blende eingelassen und entlang dem Umfang verteilt zwischen den beiden ringförmigen Teilhohlräumen (43', 43") angeordnet sind.

8. Schalldämpfervorrichtung nach einem der vorhergehenden Ansprüche, wobei in die stirnseitige Gehäusewand (51) des Schalldämpfers mehrere Nuten (56) zur Aufnahme von Dämpfungselementen (52) eingelassen sind, und wobei eine Einblasöffnung (55) zur Einblasung des gasförmigen Mediums aus dem Hohlraum (43) in den Strömungskanal des Schalldämpfers jeweils zwischen zwei Nuten (56) in die stirnseitige Gehäusewand (51) des Schalldämpfers eingelassen ist.

9. Abgasturbolader, umfassend einen Verdichter (10) mit einem Verdichtergehäuse (12) sowie eine Turbine (20), sowie eine Schalldämpfervorrichtung nach einem der Ansprüche 1 bis 8, welche am Verdichtergehäuse (12) des Verdichters befestigt ist.

## Claims

1. Silencer device,
which is provided for fastening to a compressor housing of an exhaust-gas turbocharger, comprising a cylindrical silencer (50) which
comprises a central, axially directed air outlet opening (54) for connection to an inflow channel of a compressor of the exhaust-gas turbocharger and
a flow channel which leads to the central air outlet opening and comprises at least one deflection from the radial direction into the axial direction; and
a compressor housing add-on (40) which is provided for arrangement between the silencer and the compressor housing of an exhaust-gas turbocharger, comprising
a central opening (42) for the leadthrough of the inflow channel of the compressor of an exhaust-gas turbocharger,
a annular cavity (43) which surrounds the central opening,
an external feed line (44) which opens into the cavity and which serves for feeding a gaseous medium into the cavity (43), and
a discharge opening (41) for discharging the gaseous medium out of the cavity (43), **characterized in that**
the discharge opening (41) is directed axially and is arranged on that side of the compressor housing add-on which is provided for the fastening to the silencer and
blows the gaseous medium into the flow channel of the silencer upstream of the deflection of the flow as it emerges from the central opening of the silencer, wherein,
in the region of a face-side housing wall (51) of the silencer, there is provided at least one blow-in opening (55) which connects the annular cavity (43) to the flow channel of the silencer and which is provided for the blowing-in of the gaseous medium from the cavity (43) into the flow channel of the silencer.

2. Silencer device according to Claim 1, comprising multiple external feed lines (44) which are distributed along the circumference of the annular cavity and which open into the annular cavity (43) and which serve for feeding different gaseous media into the annular cavity (43).

3. Silencer device according to either of Claims 1 and 2, wherein, in the annular cavity (43), between the at least one external feed line (44) and the at least one discharge opening (41), there is provided a screen (45) which divides the annular cavity into two annular sub-cavities (43', 43"), wherein the two annular sub-cavities (43', 43") are connected by means of at least one throughflow opening (46).

4. Silencer device according to Claim 3, wherein the screen (45) is of annular-disc-shaped form.

5. Silencer device according to Claim 4, wherein the annular-disc-shaped screen (45) is dimensioned such that, during the assembly process, it can be inserted in an axial direction through the discharge opening (41) into the cavity (43).

6. Silencer device according to any of Claims 3 to 5, wherein at least one throughflow opening (46) is delimited by the screen (45), and the throughflow opening is of annular or partially annular form.

7. Silencer device according to any of Claims 3 to 5, wherein multiple throughflow openings (46) are formed into the screen and are arranged, so as to be distributed along the circumference, between the two annular sub-cavities (43', 43").

8. Silencer device according to any of the preceding claims, wherein multiple grooves (56) for receiving damping elements (52) are formed into the face-side housing wall (51) of the silencer, and wherein a blow-in opening (55) for the blowing-in of the gaseous medium from the cavity (43) into the flow channel of the silencer is formed into the face-side housing wall (51) of the silencer in each case between two grooves (56).

9. Exhaust-gas turbocharger, comprising a compressor (10) with a compressor housing (12) and comprising a turbine (20), and a silencer device according to any of Claims 1 to 8, which is fastened to the compressor housing (12) of the compressor.

## Revendications

1. Dispositif d'atténuation de bruit,
lequel est destiné à être fixé à un carter de compresseur d'un turbocompresseur à gaz d'échappement, comportant
un silencieux cylindrique (50), lequel comporte
une ouverture de sortie d'air (54) centrale orientée axialement destinée à être raccordée à un canal d'entrée d'écoulement d'un compresseur du turbocompresseur à gaz d'échappement
ainsi qu'un canal d'écoulement menant jusqu'à l'ouverture de sortie d'air centrale et effectuant en l'occurrence au moins une déviation de la direction radiale à la direction axiale ;
ainsi qu'un élément auxiliaire (40) de carter de compresseur, lequel est destiné à être disposé entre le silencieux et le carter de compresseur d'un turbocompresseur à gaz d'échappement,
comportant
une ouverture centrale (42) pour le passage du canal d'entrée d'écoulement du compresseur d'un turbocompresseur à gaz d'échappement,
une cavité annulaire (43) entourant l'ouverture centrale,
une conduite d'amenée externe (44) débouchant dans la cavité et servant à l'amenée d'un milieu gazeux dans la cavité (43),
ainsi qu'une ouverture de dérivation (41) servant à la dérivation du milieu gazeux hors de la cavité (43), **caractérisé en ce que**
l'ouverture de dérivation (41) est orientée axialement et est disposée sur le côté de l'élément auxiliaire de carter de compresseur destiné à être fixé au silencieux, et
insuffle le milieu gazeux dans le canal d'écoulement du silencieux avant la déviation de l'écoulement lors de la sortie hors de l'ouverture centrale du silencieux,
au moins une ouverture d'insufflation (55) étant prévue dans la région d'une paroi de carter frontale (51) du silencieux, laquelle ouverture d'insufflation relie la cavité annulaire (43) au canal d'écoulement du silencieux et est destinée à l'insufflation du milieu gazeux hors de la cavité (43) dans le canal d'écoulement du silencieux.

2. Dispositif d'atténuation de bruit selon la revendication 1, comportant plusieurs conduites d'amenée externes (44) réparties le long de la périphérie de la cavité annulaire et débouchant dans la cavité annulaire (43) pour l'amenée de différents milieux gazeux dans la cavité annulaire (43).

3. Dispositif d'atténuation de bruit selon la revendication 1 ou 2, dans lequel un obturateur (45) est disposé dans la cavité annulaire (43) entre l'au moins une conduite d'amenée externe (44) et l'au moins une ouverture de dérivation (41), lequel obturateur divise la cavité annulaire en deux cavités partielles annulaires (43", 43"), dans lequel les deux cavités partielles annulaires (43', 43") sont reliées au moyen d'au moins une ouverture de passage (46).

4. Dispositif d'atténuation de bruit selon la revendication 3, dans lequel l'obturateur (45) est en forme de disque annulaire.

5. Dispositif d'atténuation de bruit selon la revendication 4, dans lequel l'obturateur (45) en forme de disque annulaire est dimensionné de manière à pouvoir être inséré dans la cavité (43) à travers l'ouverture d'évacuation (41) dans la direction axiale lors du montage.

6. Dispositif d'atténuation de bruit selon l'une des revendications 3 à 5, dans lequel au moins une ouverture de passage (46) est limitée par l'obturateur (45), et l'ouverture de passage est annulaire ou partiellement annulaire.

7. Dispositif d'atténuation de bruit selon l'une des revendications 3 à 5, dans lequel plusieurs ouvertures de passage (46) sont ménagées dans l'obturateur et sont disposées entre les deux cavités partielles annulaires (43', 43") de manière répartie le long de la périphérie.

8. Dispositif d'atténuation de bruit selon l'une des revendications précédentes, dans lequel plusieurs rainures (56) servant à recevoir des éléments d'amortissement (52) sont ménagées dans la paroi de carter frontale (51) du silencieux, et dans lequel une ouverture d'insufflation (55) servant à l'insufflation du milieu gazeux hors de la cavité (43) dans le canal d'écoulement du silencieux est ménagée respectivement entre deux rainures (56) dans la paroi de carter frontale (51) du silencieux.

9. Turbocompresseur à gaz d'échappement, comportant un compresseur (10) doté d'un carter de compresseur (12) ainsi qu'une turbine (20) et un dispositif d'atténuation de bruit selon l'une des revendications 1 à 8, lequel est fixé au carter (12) du compresseur.
